# FASCICULE DE BREVET EUROPEEN

(11) **EP 2 183 046 B1**
(45) Date de publication et mention de la délivrance du brevet: **20.03.2019**
(21) Numéro de dépôt: 08827022.8
(22) Date de dépôt: 23.07.2008
(51) Int. Cl.: B01J 8/06, B01J 8/00, B01J 8/02

(54) **UTILISATION DE FILTRES A PARTICULES POUR LIMITER LA DESACTIVATION DE CATALYSEURS**
VERWENDUNG VON PARTIKELFILTERN ZUR BEGRENZUNG EINER KATALYSATOR-DEAKTIVIERUNG
USE OF PARTICLE FILTERS FOR LIMITING CATALYST DEACTIVATION

(30) Priorité: 27.07.2007 FR 0756779
(43) Date de publication de la demande: 12.05.2010
(73) Titulaire: ARKEMA FRANCE, 92700 Colombes (FR)
(72) Inventeur: DUBOIS, Jean-Luc, F-69390 Millery (FR)
(74) Mandataire: Bonnel, Claudine
(86) Numéro de dépôt international: PCT/FR2008/051383
(87) Numéro de publication internationale: WO 2009/019395

(56) Documents cités:
- EP-A- 0 256 352
- EP-A- 1 714 955
- WO-A-2006/127671
- FR-A- 2 789 327
- US-A- 4 416 676
- US-A- 5 396 764
- US-A1- 2002 000 067
- US-A1- 2005 102 902

## Description

La présente invention concerne la catalyse hétérogène, et a plus particulièrement pour objet l'utilisation de monolithes comme filtres à particules pour limiter la désactivation de catalyseurs dans des réacteurs à lit fixe multitubulaires.

De nombreux procédés industriels mettent en oeuvre des réactions par catalyse hétérogène. Un des problèmes majeurs qui se pose dans ces procédés est celui de la désactivation du catalyseur. Les catalyseurs hétérogènes connaissent différents modes de désactivation tels que dépôts de composés organiques ou inorganiques, empoisonnement des sites actifs, perte de métaux.

Parmi ces modes de désactivation, la formation d'un dépôt sur la surface des catalyseurs limite l'accès des réactifs aux sites actifs et ainsi réduit progressivement les performances des réacteurs. Cette perte d'activité est bien souvent liée à la nature chimique du catalyseur, qui favorise des réactions secondaires ou des réactions de polymérisation à sa surface. Dans d'autres cas, les précurseurs de ces dépôts sont formés en amont du lit catalytique ou sont des impuretés présentes dans les réactifs, et viennent se déposer sur la tête du lit catalytique.

On définit sous le terme générique coke, la formation d'un dépôt dont la nature n'est pas exclusivement organique : il peut s'agir de dépôts carbonés issus de la dégradation des réactifs ou d'impuretés présentes dans les réactifs, mais aussi de composés inorganiques comme de la poussière de catalyseur, y compris celle issue de procédés situés en amont du lit catalytique considéré. Le dépôt de coke peut contenir aussi des particules de métaux issues de l'attrition ou de la corrosion des réacteurs et/ou des unités situées en amont des lits catalytiques. Dans la plupart des cas, il s'agit de mélanges organiques/inorganiques cumulant les différents modes de désactivation des catalyseurs.

La formation de coke entraîne une détérioration des performances du catalyseur et donc limite les rendements en produit de réaction.

La perte d'activité du catalyseur implique l'arrêt périodique des installations pour régénérer le catalyseur, par exemple par voie thermique, ce qui conduit à un manque de productivité de l'installation industrielle.

Lorsque le coke trouve ses précurseurs en amont du lit catalytique, une solution industrielle pour limiter la désactivation du catalyseur consiste à utiliser un lit sacrificiel en amont du lit catalytique. Un tel lit sacrificiel peut être constitué soit de catalyseur, soit de billes de solide inerte chimiquement. Ce lit sacrificiel fixe les dépôts de coke avant qu'ils n'atteignent le lit catalytique. Le lit sacrificiel est alors remplacé périodiquement de manière à maintenir les performances du catalyseur. Dans certains cas, plusieurs couches successives peuvent être empilées afin d'optimiser le fonctionnement des réacteurs. C'est le cas par exemple dans les hydrotraitements de coupes pétrolières ; des couches de solides inertes sont utilisées pour fixer les plus grosses particules notamment de métaux produites par corrosion des réacteurs, ou les gommes produites par polymérisation de molécules insaturées. Des couches de solides actifs sont utilisées pour piéger les métaux tels que vanadium, nickel, arsenic, sodium qui sont des poisons connus des catalyseurs d'hydrotraitement. Ces différentes couches sont placées au-dessus des catalyseurs actifs en hydrotraitement et limitent ainsi leur désactivation.

D'autres solutions ont été proposées pour éviter la désactivation des catalyseurs par formation de coke. La demande de brevet EP 1 714 955 décrit une méthode pour supprimer le dépôt de substances organiques solides dans un réacteur multitubulaire à lit fixe consistant à introduire un solide d'acidité de Hammett comprise entre -5,6 et 1,5 en tête du tube rempli de catalyseur, ou entre des couches de catalyseurs, ou en mélange avec le catalyseur ; cette méthode est adaptée pour les réactions d'oxydation catalytique en phase gaz, plus particulièrement pour l'oxydation du propylène en acroléine en présence d'oxygène moléculaire, suivie de l'oxydation de l'acroléine en acide acrylique.

Dans la demande de brevet EP 1 734 028, un procédé de production d'acroléine et d'acide acrylique à partir de propylène ou de propane selon une réaction d'oxydation en présence d'un catalyseur est mis en oeuvre avec de l'air filtré comme source d'oxygène. Des filtres de type par exemple gazes métalliques sont utilisés en amont du procédé pour éliminer les particules présentes en suspension dans l'air nécessaire au procédé.

D'autres solutions, telle que celle décrite dans le brevet US 6,545,178, consistent à limiter la formation des sous-produits à l'origine des dépôts sur le catalyseur, en utilisant des matières premières exemptes d'impuretés. Cette méthode nécessite cependant une purification préalable de la matière première, telle que le propylène pour la production d'acroléine/acide acrylique, ce qui entraîne un surcoût pour le procédé.

D'une manière générale, les procédés industriels classiques mettent en oeuvre, en amont du lit catalytique, un lit de billes de petite taille en matériaux céramiques, mais pas nécessairement inertes chimiquement, comme solution au problème de la désactivation du catalyseur par dépôt de coke. Les billes sont simplement posées sur le lit catalytique dans chaque tube du réacteur multitubulaire. Leur remplacement est réalisé en aspirant par exemple le lit de billes, et nécessite d'infinies précautions pour ne pas endommager le lit catalytique qui se trouve sous le lit de billes inertes. Cette opération est non seulement coûteuse en terme de temps, mais expose aussi le personnel. De plus, le déchargement par aspiration des billes bien souvent fortement liées entre elles par du coke, conduit à une destruction des billes qui doivent ainsi être remplacées à chaque opération.

Il a été trouvé de façon surprenante qu'il est possible de limiter la désactivation des catalyseurs lors de réactions catalytiques dans des réacteurs multitubulaires en utilisant des filtres à particules de structure monolithe connus pour l'application des filtres à particules diesel.

La présente invention a donc pour objet l'utilisation de monolithes comme filtres à particules pour limiter la désactivation de catalyseurs lors de réactions catalytiques dans des réacteurs multitubulaires, lesdits monolithes comprenant des canaux parallèles dont les parois sont en matériau céramique poreux et dont la section entrante est supérieure ou égale à la section sortante.

Les monolithes, constitués d'une seule pièce, sont simplement posés sur le lit catalytique. Ils peuvent ainsi être facilement retirés et remplacés. Il est beaucoup plus facile de remplacer un monolithe constitué d'une seule pièce que de devoir par exemple aspirer un lit de billes en prenant d'infinies précautions pour ne pas endommager le lit catalytique qui se trouve sous le lit de billes inertes.

Les monolithes conduisent aussi à moins de perte de charge que les lits de billes. En effet, la perte de charge n'est générée que par l'épaisseur de la paroi des monolithes qui est beaucoup plus faible que le lit de bille équivalent à la longueur du monolithe.

D'autres caractéristiques et avantages de l'invention ressortiront mieux à la lecture de la description qui suit et en référence aux figures annexées dans lesquelles :
- La figure 1 représente le principe de piégeage de particules dans un monolithe.
- Les figures 2 à 8 représentent des exemples de maillage pour les monolithes utilisés dans l'invention.
- La figure 9 illustre un mode de réalisation particulier de l'invention.

Les monolithes utilisés dans la présente invention sont des filtres connus pour filtrer les gaz d'échappement des moteurs Diesel en réduisant certains composés dont les particules solides. Ces filtres à particules (FAP) sont décrits notamment dans l'ouvrage "Les technologies des moteurs de véhicules lourds et leurs carburants" Tome 1 -Chapitre 5 - G. Plassat, ADEME.

Les monolithes dans l'invention comprennent des canaux parallèles dont les parois sont en matériau céramique poreux, leur section entrante étant supérieure ou égale à leur section sortante, leur particularité consistant à boucher certains canaux à une extrémité de façon à forcer les gaz entrant à circuler à travers les parois poreuses séparant les canaux, la filtration s'effectuant alors de manière radiale, perpendiculairement au sens de l'écoulement et non dans le sens de l'écoulement. De préférence, un canal sur deux est bouché alternativement à une extrémité.

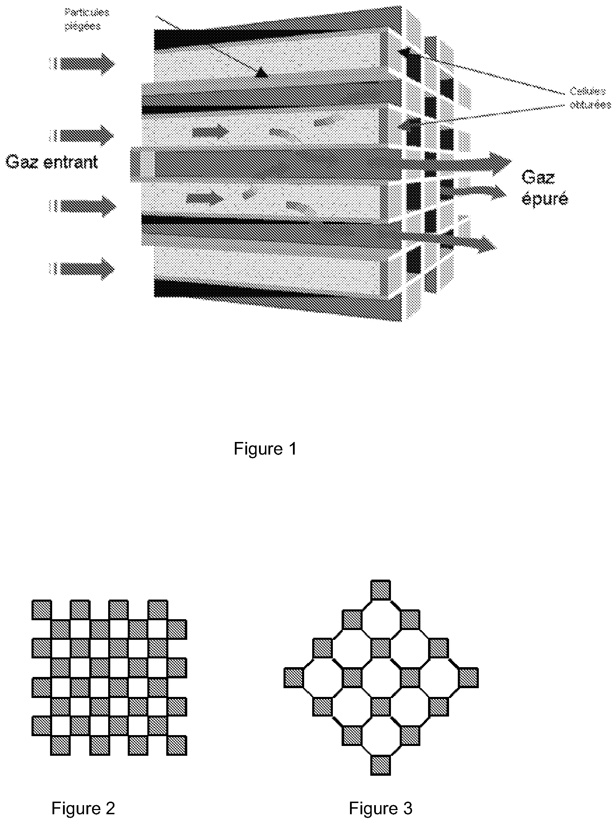

Le mode de piégeage d'un monolithe est illustré à la figure 1. Le mécanisme de filtration des monolithes en céramique est à la fois une filtration en profondeur et une filtration de surface. Au début, les particules sont collectées dans les pores, par dépôt, par inertie et par diffusion. À mesure que la charge du filtre augmente, une filtration de surface peut aussi s'effectuer.

La nature du matériau filtrant est un paramètre affectant à la fois ses performances et sa durabilité. Il doit capturer physiquement les particules solides et les garder jusqu'à la prochaine régénération.

Les monolithes dans l'invention peuvent être réalisés en différents matériaux céramiques poreux comprenant du carbure de silicium, de la cordiérite, du titanate d'aluminium, ou de la mullite.

Ces matériaux présentent de nombreux avantages :
- une grande efficacité de filtration.
- une très grande inertie chimique qui permet de s'assurer que le filtre à particule lui-même ne conduit pas à la formation de nouvelles impuretés.
- une très grande stabilité thermique qui permet de régénérer les filtres à particules par combustion à haute température des dépôts carbonés qui se sont formés, les filtres pouvant ainsi être réutilisés.
- une très grande conductivité thermique permettant d'assurer un préchauffage des réactifs avant leur arrivée sur le lit catalytique.
- une bonne résistance mécanique.
- un faible poids.

De préférence le matériau céramique poreux est le carbure de silicium qui présente notamment une bonne résistance aux températures élevées.

L'épaisseur des parois, la taille des pores et la porosité sont des paramètres qui peuvent influer les propriétés des monolithes. La taille des pores peut varier dans une large mesure, en particulier peut aller de 1 à 100 microns. La porosité des monolithes peut aller de 10 % à 70 %.

Des exemples de monolithes pouvant convenir dans le cadre de la présente invention sont les structures nid d'abeilles en matériau céramique poreux décrites dans le brevet FR 2 796 638.

Les monolithes peuvent être de maillage symétrique ou asymétrique.

Un exemple de maillage symétrique est représenté à la figure 2 où les motifs, ici de section carrée, sont identiques entre l'entrée et à la sortie, la section entrante étant égale à la section sortante.

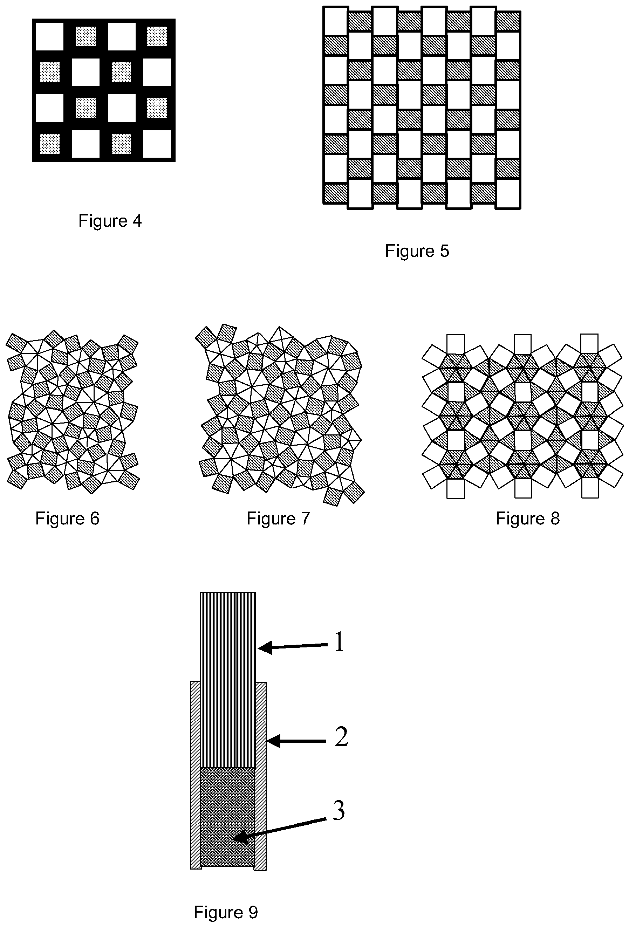

Les figures 3 à 8 illustrent des maillages asymétriques. On définit une maille asymétrique par le fait que les canaux entrants et sortants n'ont pas les mêmes dimensions, tout en ayant une forme géométrique définie et précise. Les monolithes asymétriques présentent l'avantage par rapport aux monolithes symétriques de pouvoir accumuler une plus grande quantité de coke/particules avant de devoir être remplacés car les cellules d'entrée ont un volume et une surface d'échange plus grands que les cellules de sortie, et donc que des cellules classiques. La figure 3 illustre des cellules asymétriques avec des canaux octogonaux et des canaux carrés. Les canaux carrés sont fermés à l'entrée, alors que les canaux octogonaux sont fermés à l'autre extrémité. Cette asymétrie est particulièrement avantageuse car le volume disponible pour accumuler du coke est ainsi beaucoup plus grand. Ces structures asymétriques sont particulièrement intéressantes lorsque l'on souhaite accumuler du coke sur une longue période. Les figures 4 et 5 représentent des maillages asymétriques avec des canaux carrés et rectangulaires. On peut aussi avoir des schémas plus complexes avec des maillages triangulaires, tels que représentés par exemple sur les figures 6 à 8. Ce concept ouvre de nombreuses possibilités de géométries qui ne sont pas limitées aux représentations des figures annexées.

La taille des monolithes selon l'invention peut varier dans de larges mesures, mais la taille est de préférence adaptée à la taille des tubes du réacteur, de façon à ne constituer qu'une seule pièce conduisant à une grande facilité de démontage et remontage. La taille peut varier de quelques millimètres à plusieurs centaines de millimètres, en particulier entre 10 et 50 mm. On ne sortirait pas de l'invention si l'on associe plusieurs monolithes, par exemple en les soudant avec un ciment réfractaire ou en les disposant dans des paniers facilement démontables.

La section peut se présenter sous différentes géométries, par exemple carrée, circulaire ou elliptique.

La longueur des monolithes peut varier de 5 à 100 cm, et de préférence de 10 à 50 cm, et encore plus préférentiellement entre 15 et 30 cm.

Les monolithes peuvent être facilement régénérés selon les méthodes bien connues de l'homme du métier. La régénération est réalisée avant que ne se produisent les problèmes d'augmentation de pression liés à la surcharge du filtre ou au colmatage des pores.

Dans un mode de réalisation de l'invention illustré par la figure 9 le monolithe 1 est inséré partiellement dans le réacteur 2 à la surface du lit de catalyseur 3. Cette configuration ne peut être obtenue qu'avec un monolithe, et ne peut pas être obtenue avec les solutions connues de l'homme de l'art qui consistent à utiliser un lit de billes. L'avantage particulier de cette configuration est qu'elle permet d'utiliser plus de catalyseur dans le réacteur et ainsi d'augmenter les productivités des réacteurs industriels. Dans un mode de réalisation préféré de l'invention, les monolithes sont insérés partiellement dans chacun des tubes d'un réacteur multitubulaire.

Les réactions catalytiques qui peuvent être mises en oeuvre dans la présente invention sont par exemple des réactions d'oxydation en phase gaz telles que l'oxydation du propane ou du propylène en acroléine, l'oxydation de l'acroléine ou du propane en acide acrylique, l'oxydation d'isobutène ou de tertiobutanol en méthacroléine ou acide méthacrylique, l'oxydation du méthanol en formaldéhyde ou en diméthoxyméthane, l'oxydation de l'o-xylène en anhydride phtalique, l'oxydation du butane en anhydride maléique, l'oxydation du benzène en anhydride maléique, l'oxydation du naphtalène en anhydride phtalique, l'oxydation de l'éthylène en oxyde d'éthylène. On peut citer aussi la déshydratation du glycérol en acroléine, l'oxydéshydratation du glycérol en acide acrylique, la conversion du méthanol en méthyl mercaptan, ou toute autre réaction utilisant un lit fixe multitubulaire.

La présente invention va maintenant être encore illustrée par des exemples donnés à titre non limitatif.

### EXEMPLES

Des mesures de perte de charge ont été effectuées afin de comparer différentes configurations de filtre à particules.

On a utilisé un réacteur constitué d'un tube de 25,4 mm de diamètre intérieur rempli de filtre à particules sur une hauteur de 25 cm.

La différence de perte de charge a été mesurée directement entre l'entrée et la sortie du réacteur pour chaque système seul, pour différents débits d'azote allant de 0 à 2,7 m³/h. Les débits sont donnés à température et pression ambiante (1atm et 25°C).

Les filtres à particules testés sont indiqués dans le tableau ci-après (70 cpsi: 11 cellules par cm² ; 200 cpsi: 31 cellules par cm²) :

| Filtre | Nature | Caractéristiques/référence |
|---|---|---|
| Ex 1 (comparatif) | Billes de verre | Diamètre 5,2 mm |
| Ex 2 (comparatif) | Mousse de céramique 30 dpi | Porvair-Selee |
| Ex 3 (comparatif) | Macro Trap 8 mm | Saint Gobain NORPRO |
| Ex 4 (comparatif) | Macro Trap 6 mm | Saint Gobain NORPRO |
| Ex 5 | Monolithe asymétrique | Voir photo sur figure 11 |
| Ex 6 | Monolithe symétrique 70 cpsi | Voir photo sur figure 11 |
| Ex 7 | Monolithe symétrique 200 cpsi | Voir photo sur figure 11 |

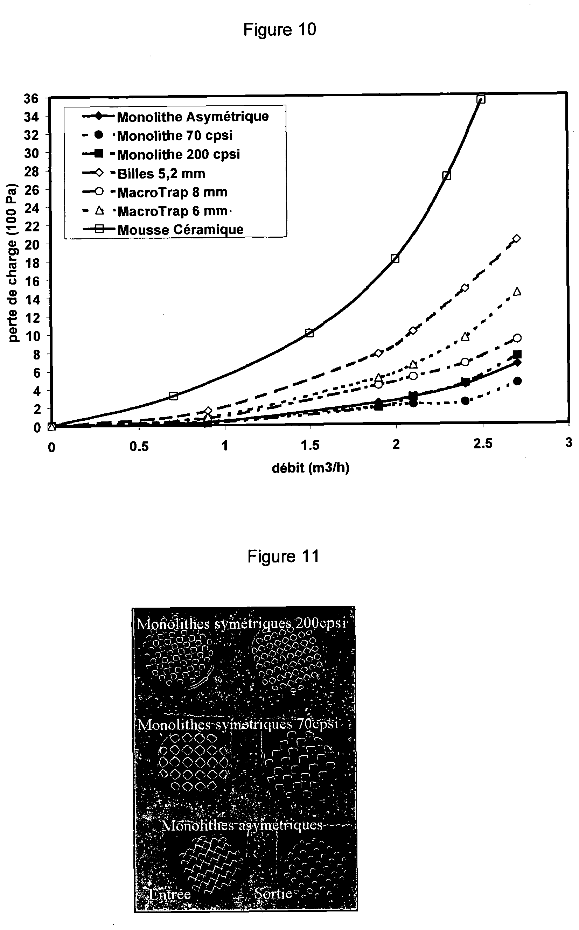

L'évolution de la perte de charge, exprimée en Pa en fonction du débit d'azote est représentée sur la figure 10, pour chaque filtre testé.

Il a été constaté des pertes de charges moindres avec les monolithes comparativement au lit de billes, à une mousse de céramique ou aux Macro-Trap testés.

## Revendications

1. Méthode pour limiter la désactivation de catalyseurs lors de réactions catalytiques dans des réacteurs multitubulaires, **caractérisée en ce que** l'on utilise des monolithes comme filtres à particules, lesdits monolithes comprenant des canaux parallèles dont les parois sont en matériau céramique poreux, et dont la section entrante est supérieure ou égale à la section sortante, certains canaux étant bouchés à une extrémité, et **en ce que** les monolithes sont constitués d'une seule pièce adaptée à la taille des tubes du réacteur et sont insérés partiellement dans les tubes du réacteur.

2. Méthode selon la revendication 1 **caractérisée en ce qu'**un canal sur deux est bouché alternativement à une extrémité.

3. Méthode selon la revendication 1 ou 2 **caractérisée en ce que** les monolithes sont de maille symétrique.

4. Méthode selon la revendication 1 ou 2 **caractérisée en ce que** les monolithes sont de maille asymétrique.

5. Méthode selon l'une quelconque des revendications précédentes **caractérisée** en que la réaction catalytique est une réaction d'oxydation en phase gaz.

6. Méthode selon l'une quelconque des revendications précédentes **caractérisée** en que la réaction catalytique est l'oxydation du propylène ou du propane en acroléine.

7. Méthode selon l'une quelconque des revendications 1 à 5 **caractérisée** en que la réaction catalytique est l'oxydation de l'acroléine ou du propane en acide acrylique.

8. Méthode selon l'une quelconque des revendications 1 à 5 **caractérisée** en que la réaction catalytique est l'oxydation de l'o-xylène en anhydride phtalique.

9. Méthode selon l'une quelconque des revendications 1 à 5 **caractérisée en ce que** la réaction catalytique est l'oxydation du méthanol en formaldéhyde ou en diméthoxyméthane.

10. Méthode selon l'une quelconque des revendications 1 à 4 **caractérisée** en que la réaction catalytique est la déshydratation du glycérol en acroléine.

11. Méthode selon l'une des revendications 1 à 4 **caractérisée** en que la réaction catalytique est l'oxydéshydratation du glycérol en acide acrylique.

## Patentansprüche

1. Verfahren zur Einschränkung der Desaktivierung von Katalysatoren bei katalytischen Reaktionen in Mehrrohrreaktoren, **dadurch gekennzeichnet, dass** Monolithe als Teilchenfilter verwendet werden, wobei die Monolithe parallele Kanäle aufweisen, deren Wände aus porösem Keramikmaterial bestehen und deren Eintrittsquerschnitt größer oder gleich dem Ausgangsquerschnitt ist, wobei einige Kanäle an einem Ende verstopft sind, und dass die Monolithe aus einem einzigen Stück, das auf die Größe der Rohre des Reaktors abgestimmt ist, bestehen und teilweise in die Rohre des Reaktors eingeschoben sind.

2. Verfahren nach Anspruch 1, **dadurch gekennzeichnet, dass** einer von zwei Kanälen alternierend an einem Ende verstopft ist.

3. Verfahren nach Anspruch 1 oder 2, **dadurch gekennzeichnet, dass** die Monolithe aus einem symmetrischen Gitter bestehen.

4. Verfahren nach Anspruch 1 oder 2, **dadurch gekennzeichnet, dass** die Monolithe aus einem asymmetrischen Gitter bestehen.

5. Verfahren nach einem der vorhergehenden Ansprüche, **dadurch gekennzeichnet, dass** es sich bei der katalytischen Reaktion um eine Oxidationsreaktion in der Gasphase handelt.

6. Verfahren nach einem der vorhergehenden Ansprüche, **dadurch gekennzeichnet, dass** es sich bei der katalytischen Reaktion um die Oxidation von Propylen oder Propan zu Acrolein handelt.

7. Verfahren nach einem der Ansprüche 1 bis 5, **dadurch gekennzeichnet, dass** es sich bei der katalytischen Reaktion um die Oxidation von Acrolein oder Propan zu Acrylsäure handelt.

8. Verfahren nach einem der Ansprüche 1 bis 5, **dadurch gekennzeichnet, dass** es sich bei der katalytischen Reaktion um die Oxidation von o-Xylol zu Phthalsäureanhydrid handelt.

9. Verfahren nach einem der Ansprüche 1 bis 5, **dadurch gekennzeichnet, dass** es sich bei der katalytischen Reaktion um die Oxidation von Methanol zu Formaldehyd oder zu Dimethoxymethan handelt.

10. Verfahren nach einem der Ansprüche 1 bis 4, **dadurch gekennzeichnet, dass** es sich bei der katalytischen Reaktion um die Dehydratisierung von Glycerin zu Acrolein handelt.

11. Verfahren nach einem der Ansprüche 1 bis 4, **dadurch gekennzeichnet, dass** es sich bei der katalytischen Reaktion um die Oxydehydratisierung von Glycerin zu Acrylsäure handelt.

## Claims

1. Method for limiting the deactivation of catalysts during catalytic reactions in multitubular reactors, **characterized in that** monoliths are used as particle filters, said monoliths comprising parallel channels, the walls of which are made of porous ceramic material, and the inlet cross section of which is greater than or equal to the outlet cross section, some channels being plugged at one end, and **in that** the monoliths consist of a single part adapted to the size of the tubes of the reactor, and are inserted partially into the tubes of the reactor.

2. Method according to Claim 1, **characterized in that** one channel in two is plugged alternatively at one end.

3. Method according to Claim 1 or 2, **characterized in that** the monoliths are of symmetrical mesh.

4. Method according to Claim 1 or 2, **characterized in that** the monoliths are of asymmetrical mesh.

5. Method according to any one of the preceding claims, **characterized in that** the catalytic reaction is a gasphase oxidation reaction.

6. Method according to any one of the preceding claims, **characterized in that** the catalytic reaction is the oxidation of propylene or of propane to give acrolein.

7. Method according to any one of Claims 1 to 5, **characterized in that** the catalytic reaction is the oxidation of acrolein or of propane to give acrylic acid.

8. Method according to any one of Claims 1 to 5, **characterized in that** the catalytic reaction is the oxidation of o-xylene to give phthalic anhydride.

9. Method according to any one of Claims 1 to 5, **characterized in that** the catalytic reaction is the oxidation of methanol to give formaldehyde or to give dimethoxymethane.

10. Method according to any one of Claims 1 to 4, **characterized in that** the catalytic reaction is the dehydration of glycerol to give acrolein.

11. Method according to any one of Claims 1 to 4, **characterized in that** the catalytic reaction is the oxydehydration of glycerol to give acrylic acid.
